# EUROPEAN PATENT APPLICATION

(11) **EP 1 564 931 A1**
(43) Date of publication of application: **17.08.2005**
(21) Application number: 03772797.1
(22) Date of filing: 17.11.2003
(51) Int. Cl.: H04L 12/28, H04L 29/02

(54) **RADIO COMMUNICATION SYSTEM**

(30) Priority: 18.11.2002 JP 2002334262
(71) Applicant: MATSUSHITA ELECTRIC INDUSTRIAL CO., LTD., Kadoma-shi, Osaka 571-8501 (JP)
(72) Inventor: YURUGI, Hiroyuki, Ibaraki-shi, Osaka 567-0034 (JP); OKADA, Tsuyoshi, Takarazuka-shi, Hyogo 655-0886 (JP)
(74) Representative: Grünecker, Kinkeldey, Stockmair & Schwanhäusser Anwaltssozietät
(86) International application number: PCT/JP2003/014554
(87) International publication number: WO 2004/047371

(57) **Abstract**

Conventionally, there resides such problem in a wireless network that procedures up to the establishment of wireless link cannot be carried out swiftly.

There is provided a wireless communication system comprising a wireless communication unit 100 including a communication antenna 104 that performs wireless data communication, a wire connection section 107 that performs wired data communication to establish a wireless link for carrying out wireless data communication using a wired connection, and a connection change-over switch 103 that changes over whether the wireless data communication should be carried out using the communication antenna 104 or the wired data communication should be carried out using a first wired communication means; and a wireless communication unit 110 including a communication antenna 114 that performs wireless data communication with the communication antenna 104, a wire connection section 117 that performs wired data communication with the first wired communication means using the wired connection and a connection change-over switch 113 that changes over whether wireless data communication should be carried out using a second wireless communication means or the wired data communication should be carried out using the second wired communication means.

## Description

### Technical Field

The present invention relates to, for example, a wireless communication system which is applicable to a wireless network employing Bluetooth or the like.

### Background Art

In a wireless network represented by the Bluetooth (for example, Bluetooth SIG, Inc., "Specification of the Bluetooth System, Profiles, version 1.1) Part K: 1, pp. 13-53, [online], February 22, 2001, Bluetooth SIG, Inc., [Searched on November 13, 2002], refer to the Internet <URL: http:// www. bluetooth. com/pdf/Bluetooth_11_Proflies_Book. pdf>), to establish wireless link between two devices and to begin actual data communication, various predetermined procedures have to be carried out.

The entire disclosure of (Specification of the Bluetooth System, Profiles, version 1.1) are incorporated herein by reference in its entirety.

The procedures up to the establishment of wireless link will be described more specifically.

A device, which takes the initiative in establishing the wireless link, performs device search for a specific period of time to find an objective device of the link establishment and obtain individual identification information of the objective device of the link establishment.

The device, which takes the initiative in establishing the wireless link, determines the objective device of the link establishment based on the result of the device search, and begins the operation for establishing the link.

As for the parameters relevant to such procedures, a setting relevant to the authentication for determining the admission of connection, a setting relevant to the individual identification information obtained by the search result and the like are included.

Conventionally, in the wireless network as described above, in many cases, the procedures up to the establishment of the wireless link has uncertainty and takes a considerable time.

In particular, in the operation up to the link establishment in the wireless network, the following steps have to be carried out. That is, the objective device of the link establishment is searched first; and based on the search result, the objective device, with which the link should be established, is selected. Accordingly, it sometimes takes a considerable time to establish the link.

Also, in the wireless network environment, in some cases, signals transmitted from a device, which takes the initiative in establishing the link, do not reach to a receiving device failing in establishing the link itself. Particularly, the Bluetooth, which has been widely employed in these days, and the IEEE 802. 11b use the same frequency band of 2.4GHz, which is called as ISM band (Industrial, Scientific and Medical Band). The respective electric waves sometimes interfere with each other and affect adversely on the operation to establish the link.

Here, Japanese Unexamined Patent Application Publication No. H8-204777 discloses a method in which a wireless unit monitors a wired communication protocol to obtain parameters necessary for wireless communication, and readily shifts from a wired system to a wireless system.

The entire disclosure of Japanese Unexamined Patent Application Publication No. H8-204777 are incorporated herein by reference in its entirety.

Also, Japanese Unexamined Patent Application Publication No. 2002-359623 discloses a method in which setting of parameters in wireless communication is readily carried out beforehand by using a wired communication section included in a wireless communication terminal.

The entire disclosure of Japanese Unexamined Patent Application Publication No. 2002-359623 are incorporated herein by reference in its entirety.

However, when such methods are employed, additional program for monitoring the wired communication and additional protocol for setting the parameters using the wired communication have to be prepared.

And further, it is necessary to provide an interface for selectively using a mode for carrying out wireless communication and a mode for carrying out the setting of parameters, and prompting a user to select the mode; and the user has to give an instruction of mode selection corresponding to the prompt.

Accordingly, it is difficult to carry out the procedures up to the establishment of the wireless link swiftly in the wireless network.

Furthermore, when the above-mentioned means are employed in a medium for storing the program and the limited electronic devices in a user interface, it is difficult to add an additional program thereto and provide the interface for changing over the mode.

### Disclosure of the Invention

From the viewpoint of the conventional problems as described above, an object of the present invention is, for example, to provide a wireless communication system which is capable of carrying out the procedures up to the establishment of a wireless link in a wireless network more swiftly.

A first aspect of the present invention is a wireless communication system, comprising:
a first wireless communication unit including first wireless communication means that performs wireless data communication, first wired communication means that performs wired data communication to establish a wireless link for performing said wireless data communication using a wired connection, and first change-over means that changes over whether said wireless data communication should be performed using said first wireless communication means or said wired data communication should be performed using said first wired communication means; and
a second wireless communication unit including second wireless communication means that performs said wireless data communication with said first wireless communication means, second wired communication means that performs said wired data communication with said first wired communication means using said wired connection, and second change-over means that changes over whether said wireless data communication should be performed using said second wireless communication means or said wired data communication should be performed using said second wired communication means.

A second aspect of the present invention is the wireless communication system according to the first aspect of the present invention, wherein said first wireless communication unit further includes first wired connection detecting means that detects whether or not said wired connection is being performed between said first wired communication means and said second wired communication means;
when said first wired connection detecting means detects that said wired connection is being performed, said first change-over means changes over so that said wired data communication is performed, and using the wired connection detected by said first detecting means, gives a change-over instruction to said second change-over means to change over so that said wired data communication is performed;
said second change-over means changes over, based on the change-over instruction given by said first change-over means, so that said wired data communication is performed.

A third aspect of the present invention is the wireless communication system according to the second aspect of the present invention, wherein said first wireless communication unit further includes a first signal level adjusting means that, when said first wired connection detecting means detects that said wired connection is being performed, adjusts a signal level so that said wired data communication is performed using a signal level smaller than the signal level necessary for said wireless data communication.

A fourth aspect of the present invention is a wireless communication unit comprising:
first wireless communication means that performs wireless data communication;
first wired communication means that performs wired data communication to establish a wireless link for performing said wireless data communication using a wired connection; and
first change-over means that changes over whether said wireless data communication should be performed using said first wireless communication means or said wired data communication should be performed using said first wired communication means.

A fifth aspect of the present invention is a wireless communication unit according to the fourth aspect of the present invention, further comprising first wired connection detecting means that detects whether or not said wired connection is being performed between said first wired communication means and second wired communication means that performs said wired data communication with said first wired communication means using said wired connection,
wherein, when said first wired connection detecting means detects said wired connection is being performed, said first change-over means changes over so that said wired data communication is performed, and using the wired connection detected by said first wired connection detecting means, gives a change-over instruction to second change-over means which changes over whether said wireless data communication should be performed using second wireless communication means that performs said wireless data communication with said first wireless communication means or said wired data communication should be performed using said second wired communication means, to change over so that said wired data communication is performed.

A sixth aspect of the present invention is a wireless communication unit comprising:
second wireless communication means that performs, with first wireless communication means that performs wireless data communication, said wireless data communication;
second wired communication means that performs, with first wired communication means that performs wired data communication to establish a wireless link for performing said wireless data communication using a wired connection, said wired data communication using said wired connection; and
second change-over means that changes over whether said wireless data communication should be performed using said second wireless communication means or said wired data communication should be performed using said second wired communication means.

A seventh aspect of the present invention is the wireless communication unit according to the sixth aspect of the present invention, wherein, when first wired connection detecting means, which detects whether or not said wired connection is being performed between said first wired communication means and said second wired communication means, detects that said wired connection is being performed, first change-over means, which changes over whether said wireless data communication should be performed using said first wireless communication means or said wired data communication should be performed using said first wired communication means, changes over so that said wired data communication is performed using said first wired communication means, and using said detected wired connection, gives a change-over instruction to said second change-over means to change over so that said wired data communication is performed,
said second change-over means changes over, based on the change-over instruction given by said first change-over means, so that said wired data communication is performed.

A eighth aspect of the present invention is a wireless communication method comprising:
a first wireless communication step of performing, using first wireless communication means that performs wireless data communication, wireless data communication;
a first wired communication step of performing, using first wired communication means that performs wired data communication to establish a wireless link for performing said wireless data communication using a wired connection, wired data communication;
a first change-over step of changing over, using first change-over means that changes over whether said wireless data communication should be performed using said first wireless communication means or said wired data communication should be performed using said first wired communication means;
a second wireless communication step of performing, using second wireless communication means that performs said wireless data communication with said first wireless communication means, wireless data communication;
a second wired communication step of performing, using second wired communication means that performs said wired data communication with said first wired communication means using said wired connection, wired data communication; and
a second change-over step of changing over, using second change-over means that changes over whether said wireless data communication should be performed using said second wireless communication means or said wired data communication should be performed using said second wired communication means.

A ninth aspect of the present invention is a wireless communication method comprising:
a wireless communication step of performing, using first wireless communication means that performs wireless data communication, wireless data communication;
a wired communication step of performing, using first wired communication means that performs wired data communication to establish a wireless link for performing said wireless data communication using a wired connection, wired data communication; and
a change-over step of changing over, using first change-over means that changes over whether said wireless data communication should be performed using said first wireless communication means or said wired data communication should be performed using said first wired communication means.

A tenth aspect of the present invention is a wireless communication method, comprising:
a wireless communication step of performing, using second wireless communication means that performs, with first wireless communication means that performs wireless data communication, said wireless data communication, wireless data communication;
a wired communication step of performing, using second wired communication means that performs, with first wired communication means that performs wired data communication to establish a wireless link for performing said wireless data communication using a wired connection, said wired data communication using said wired connection, wired data communication; and
a change-over step of changing over, using second change-over means that changes over whether said wireless data communication should be performed using said second wireless communication means or said wired data communication should be performed using said second wired communication means.

An eleventh aspect of the present invention is a program for causing a computer to execute the steps of the wireless communication method according to the eighth aspect of the present invention, the steps being a first wireless communication step of performing, using first wireless communication means that performs wireless data communication, wireless data communication; a first wired communication step of performing, using first wired communication means that performs wired data communication to establish a wireless link for performing said wireless data communication using a wired connection, wired data communication; a first change-over step of changing over, using first change-over means that changes over whether said wireless data communication should be performed using said first wireless communication means or said wired data communication should be performed using said first wired communication means; a second wireless communication step of performing, using second wireless communication means that performs said wireless data communication with said first wireless communication means, wireless data communication; a second wired communication step of performing, using second wired communication means that performs said wired data communication with said first wired communication means using said wired connection, wired data communication; and a second change-over step of changing over, using second change-over means that changes over whether said wireless data communication should be performed using said second wireless communication means or said wired data communication should be performed using said second wired communication means.

A twelfth aspect of the present invention is a program for causing a computer to execute the steps of the wireless communication method according to the ninth aspect of the present invention, the steps being a wireless communication step of performing, using first wireless communication means that performs wireless data communication, wireless data communication; a wired communication step of performing, using first wired communication means that performs wired data communication to establish a wireless link for performing said wireless data communication using a wired connection, wired data communication; and a change-over step of changing over, using first change-over means that changes over whether said wireless data communication should be performed using said first wireless communication means or said wired data communication should be performed using said first wired communication means.

A thirteenth aspect of the present invention is a program for causing a computer to execute the steps of the wireless communication method according to the tenth aspect of the present invention, the steps being a wireless communication step of performing, using second wireless communication means that performs, with first wireless communication means that performs wireless data communication, said wireless data communication, wireless data communication; a wired communication step of performing, using second wired communication means that performs, with first wired communication means that performs wired data communication to establish a wireless link for performing said wireless data communication using a wired connection, said wired data communication using said wired connection, wired data communication; and a change-over step of changing over, using second change-over means that changes over whether said wireless data communication should be performed using said second wireless communication means or said wired data communication should be performed using said second wired communication means.

A fourteenth aspect of the present invention is a recording medium bearing any program of the eleventh to thirteenth aspects of the present invention, wherein the recording medium can be processed by a computer.

A fifteenth aspect of the present invention is a wireless communication unit comprising:
first wireless communication means that performs wireless data communication;
first wired communication means that performs wired data communication to establish a wireless link for performing said wireless data communication using a wired connection,
first change-over means that changes over whether said wireless data communication should be performed using said first wireless communication means or said wired data communication should be performed using said first wired communication means; and
first wired connection detecting means that detects whether or not said wired connection is being performed between said first wired communication means and second wired communication means that performs said wired data communication with said first wired communication means using said wired connection,
wherein, (1) when said first wired connection detecting means detects said wired connection is being performed, said first change-over means changes over so that said wired data communication is performed, and using said wired connection detected by said first wired connection detecting means, gives a change-over instruction to second change-over means, which changes over whether said wireless data communication should be performed using second wireless communication means that performs said wireless data communication with said first wireless communication means or said wired data communication should be performed using said second wired communication means, to change over so that said wired data communication is performed, (2) when third wired connection detecting means, which detects whether or not said wired connection is being performed between said first wired communication means and third wired communication means that performs wired data communication with said first wired communication means using a wired connection, detects that said wired connection is being performed, third change-over means, which changes over whether said wireless data communication should be performed using third wireless communication means that performs said wireless data communication with said first wireless communication means or said wired data communication should be performed using said third wired communication means, changes over so that said wired data communication is performed using said third wired communication means, and using said detected wired connection, gives a change-over instruction to said first change-over means, to change over so that said wired data communication is performed, and said first change-over means changes over, based on the change-over instruction given by said third change-over means, so that said wired data communication is performed.

### Brief Description of the Drawings

Fig. 1 is a diagram showing a configuration of a wireless communication system in accordance with an embodiment 1 of the present invention (a state in which wireless data communication is available).
Fig. 2 is a flowchart for illustrating the link establishing operation in the wireless communication system in accordance with the embodiment 1 of the present invention.
Fig. 3 is a diagram showing a configuration of the wireless communication system in accordance with the embodiment 1 of the present invention (a state in which wired data communication is available).

### (Description of reference numerals)

- 100, 110: wireless communication unit
- 101, 111: connection control section
- 102, 112: communication section
- 103, 113: connection change-over switch
- 104, 114: communication antenna
- 105, 115: connection detecting section
- 106, 116: connection control section
- 107, 117: wire connection section
- 108, 118: application
- 109, 119: user interface

### Best Mode for Carrying out the Invention

Hereinafter, an embodiment of the present invention will be described with reference to the figures.

### (Embodiment 1)

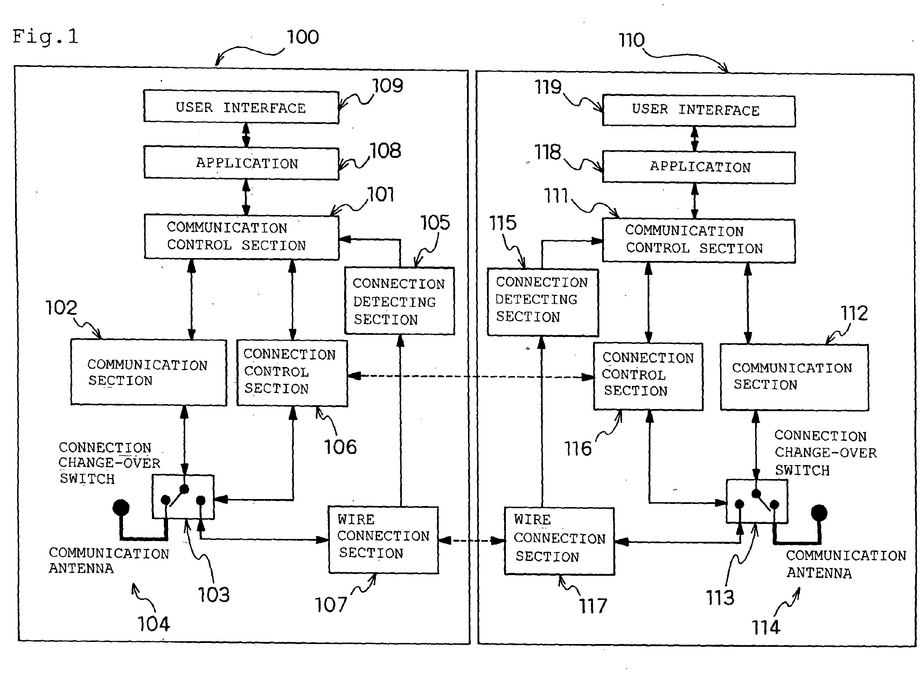

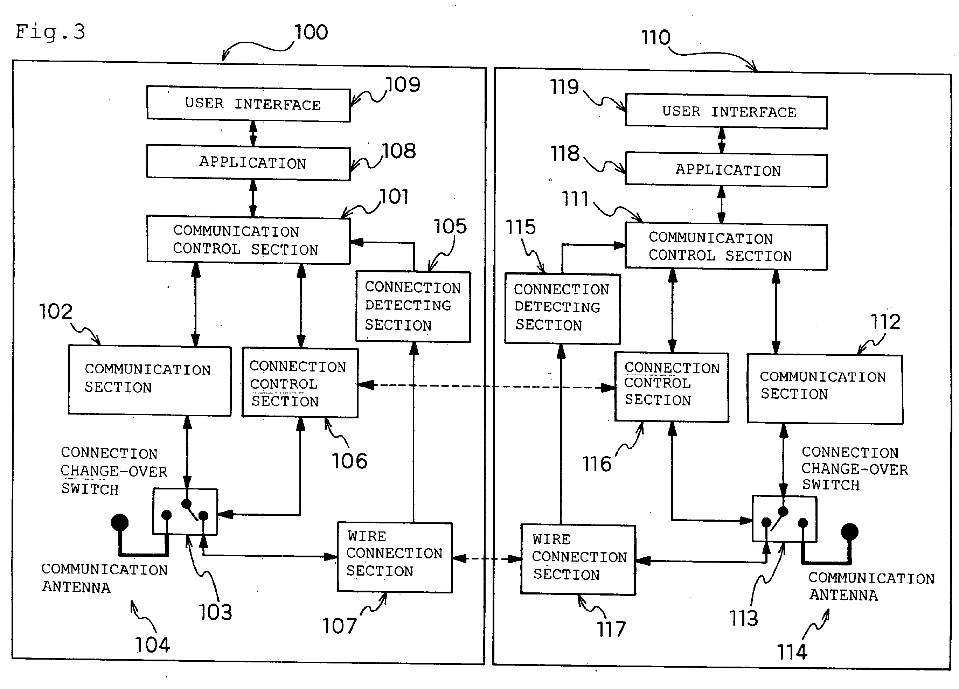

First of all, referring to Fig. 1, which is a diagram showing a configuration of a wireless communication system (in a state that wireless data communication is available) in accordance with an embodiment 1 of the present invention, and Fig. 3, which is a diagram showing a configuration of the wireless communication system (in a state that wired data communication is available) in accordance with the embodiment 1 of the present invention, the configuration of a wireless communication system in accordance with the embodiment will be describe.

The wireless communication system in accordance with the embodiment comprises a first wireless communication unit 100, which takes the initiative in establishing the link, and a second wireless communication unit 110, which accepts the link establishment.

The first wireless communication unit 100 and the second wireless communication unit 110 have the same configuration each other.

In this embodiment, the description will be made assuming that the first wireless communication unit 100 takes the initiative in establishing the link, and the second wireless communication unit 110 accepts the link establishment. Needless to say, the second wireless communication unit 110 can take_the initiative in establishing the link, and the first wireless communication unit 100 can accept the link establishment.

Here, the configuration of the first wireless communication unit 100 and the second wireless communication unit 110 will be described further in detail.

101 denotes a connection control section, 102 denotes a communication section that performs modulation and demodulation, 103 denotes a connection change-over switch, 104 denotes a communication antenna that performs wireless communication, 105 denotes a connection detecting section that detects physical connection with the second wireless communication unit, 106 denotes a connection control section that controls the connection change-over switch, 107 denotes a wire connection section that achieves the link establishment using a line, 108 denotes an application that manages the wireless data communication and 109 denotes a user interface.

111 denotes a connection control section, 112 denotes a communication section that performs modulation and demodulation, 113 denotes a connection change-over switch, 114 denotes a communication antenna that performs the wireless communication, 115 denotes a connection detecting section that detects physical connection with the second wireless communication unit, 116 denotes a connection control section that controls the connection change-over switch, 117 denotes a wire connection section that achieves the link establishment using the line, 118 denotes an application that manages the wireless data communication and 119 denotes a user interface.

The wired connection between the first wireless communication unit 100 and the second wireless communication unit 110 is established by using wired connection between the wire connection section 107 and the wire connection section 117 by means of a serial cable, which supports the RS232C, the USB or the like, and electrical contact points and connectors between the devices.

Here, when the wire connection section 107 and the wire connection section 117 are connected with each other via the wire, the connection control section 106 and the connection control section 116 are connected physically with each other, and thus control signals can be exchanged.

The communication antenna 104 corresponds to first wireless communication means of the present invention; the wire connection section 107 corresponds to first wired communication means of the present invention; means, which includes the connection change-over switch 103 and the connection control section 106, corresponds to first change-over means of the present invention; and the wireless communication unit 100 corresponds to a first wireless communication unit of the present invention. Also, the communication antenna 114 corresponds to second wireless communication means of the present invention; the wire connection section 117 corresponds to second wired communication means of the present invention; means, which includes the connection change-over switch 113 and the connection control section 116, corresponds to second change-over means of the present invention; and the wireless communication unit 110 corresponds to a second wireless communication unit of the present invention. Further, the wireless communication system of this embodiment corresponds to a wireless communication system of the present invention. And the connection detecting section 105 corresponds to first wired connection detecting means of the present invention.

Furthermore, the communication antenna 114 corresponds to third wireless communication means of the present invention; the wire connection section 117 corresponds to third wired communication means of the present invention, means, which includes the connection change-over switch 113 and the connection control section 116, corresponds to third change-over means of the present invention.

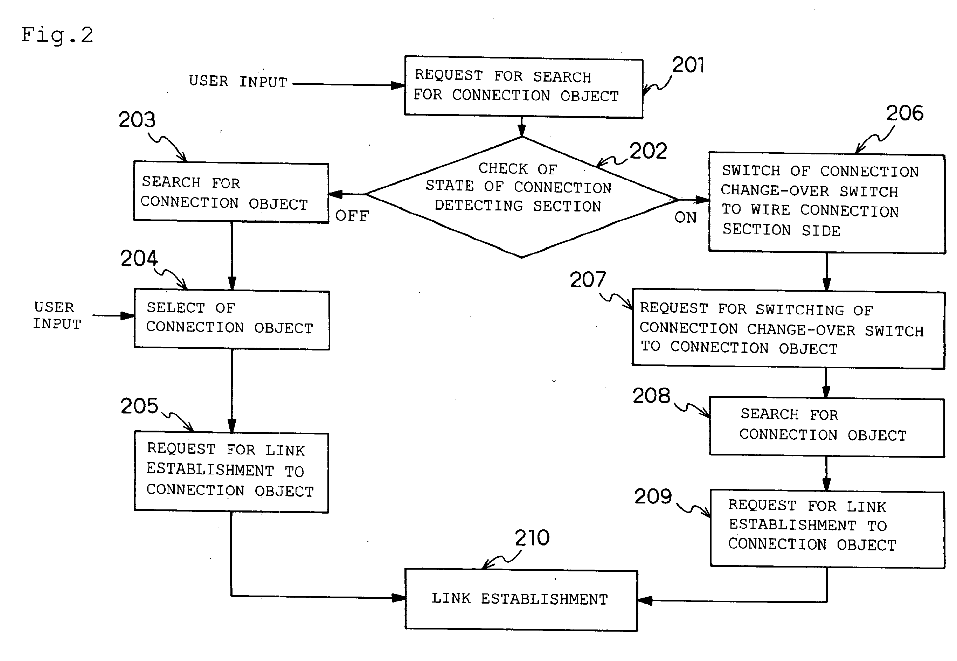

Next, referring to Fig. 2 mainly, which is a flowchart for illustrating the link establishing operation in the wireless communication system according to the embodiment 1 of the present invention, the operation of the wireless communication system according to this embodiment will be described.

While describing the operation of the wireless communication system according to this embodiment, an embodiment of a wireless communication method of the present invention also will be described.

(1) First of all, the operation to establish the link, by which the embodiment is characterized, will be described when the wireless data communication is applied to the Bluetooth.

Step 201; Corresponding to an input by a user from the external, the user interface 109 of the first wireless communication unit 100 gives an instruction to the connection control section 101 to carry out a search for periphery Bluetooth devices using the application 108.

Step 202; The connection control section 101 in the first wireless communication unit 100 makes reference to the state of the connection detecting section 105 in the first wireless communication unit 100 first.

(A) First, a description will be made as to the case where the connection detecting section 105 detects that the physical connection between the first wireless communication unit 100 and the second wireless communication unit 110 has been already established (steps 206-210) (refer to Fig. 3).

Step 206; The connection control section 101 gives an instruction to the connection control section 106 in the first wireless communication unit 100 to change over the connection change-over switch 103 in the first wireless communication unit 100 to the wire connection section 107 of the first wireless communication unit 100.

Step 207; The connection control section 106 in the first wireless communication unit 100 changes the connection change-over switch 103 in the first wireless communication unit 100 to the wire connection section 107 side, and gives an instruction to the connection control section 116 in the second wireless communication unit 110 to change the connection change-over switch 113 in the second wireless communication unit 110 to the wire connection section 117 side of the second wireless communication unit 110.

Step 208; Corresponding to the instruction from the connection control section 106 in the first wireless communication unit 100, the connection control section 116 in the second wireless communication unit 110 changes the connection change-over switch 113 in the second wireless communication unit 110 to the wire connection section 117 side of the second wireless communication unit 110, and notifies the connection control section 111 in the second wireless communication unit 110 that the connection change-over switch 113 in the second wireless communication unit 110 has been changed over.

The connection control section 101 in the first wireless communication unit 100 generates an Inquiry packet used for device search and transmits the Inquiry packet to the connection control section 112 in the second wireless communication unit 110 through the communication section 102 in the first wireless communication unit 100, the wire connection section 107 in the first wireless communication unit 100, the wire connection section 117 in the second wireless communication unit 110 and the communication section 112 in the second wireless communication unit 110.

Receiving the Inquiry packet, the connection control section 111 in the second wireless communication unit 110 generates an FHS packet as a response to the Inquiry packet, and transmits the FHS packet to the connection control section 101 of the first wireless communication unit 100 through the communication section 112 in the second wireless communication unit 110, the wire connection section 117 in the second wireless communication unit 110, the wire connection section 107 in the first wireless communication unit 100 and the communication section 102 in the first wireless communication unit.

Receiving the FHS packet, the first wireless communication unit 100 acknowledges the information necessary for establishing the link such as device class and physical address of the second wireless communication unit 110, which is the object to be connected therewith.

Step 209; The first wireless communication unit 100 makes an attempt to establish the link with the second wireless communication unit 110.

The connection control section 101 in the first wireless communication unit 100 generates a Page packet used for establishing the link and transmits the Page packet to the connection control section 111 in the second wireless communication unit 110 through the communication section 102 in the first wireless communication unit 100, the wire connection section 107 in the first wireless communication unit 100, the wire connection section 117 in the second wireless communication unit 110 and the communication section 112 in the second wireless communication unit 110.

Receiving the page packet, the connection control section 111 in the second wireless communication unit 110 generates a Page Response packet as the response to the Page packet and transmits the Page Response packet to the connection control section 101 in the first wireless communication unit through the communication section 112 in the second wireless communication unit 110, the wire connection section 117 in the second wireless communication unit 110, the wire connection section 107 in the first wireless communication unit 100 and the communication section 102 in the first wireless communication unit.

Receiving the Page Response packet, the connection control section 101 in the first wireless communication unit 100 transmits an FHS packet to the connection control section 111 in the second wireless communication unit 110 following the same steps as the above.

Receiving the FHS packet, the connection control section 111 in the second wireless communication unit 110 generates an FHS-ack packet as the response to the FHS packet and transmits the FHS-ack packet to the connection control section 101 in the first wireless communication unit 100 following the same steps as the above.

Step 210; By following the steps as described above, the wireless link is established between the first wireless communication unit 100 and the second wireless communication unit 110.

The program can be simplified by mounting a dedicated hardware which, when the connection detecting sections 105 and 115 detect that the physical connection has been already established between the first wireless communication unit 100 and the second wireless communication unit 110, automatically switches the connection change-over switches 103 and 113 to the wire connection section 107 and 117 sides respectively.

(B) Next, a description will be made as to the case where the connection detecting section 105 recognized that no physical connection has been established between the first wireless communication unit 100 and the second wireless communication unit 110 (steps 203-205 and 210) (refer to Fig. 1).

Step 203; The connection control section 101 gives an instruction to the communication section 102 to switch the connection change-over switch 103 to the communication antenna 104 side, find the objective device with which the link should be established, and obtain the individual identification information thereof.

The communication section 102 switches the connection change-over switch 103 to the communication antenna 104 side and performs device search for a specific period of time by wireless communication means using the communication antenna 104.

Step 204; The connection control section 101 displays the result of the device search to the user.

The user interface 109 gives an instruction to the connection control section 101 to input for selecting the object to be connected from the user monitoring the displays.

Corresponding to the instruction from the user interface 109, the connection control section 101 determines the objective device with which the link should be established.

Step 205; The first wireless communication unit 100 makes an attempt to establish the link with the second wireless communication unit 110 by wireless communication means using the communication antenna 104.

Step 210: By following the same procedures as the procedures to establish the wireless link in a conventional wireless communication system as described above, the wireless link is established between the first wireless communication unit 100 and the second wireless communication unit 110.

Here, the operation to establish the link in which the wireless data communication according to the embodiment is applied to the Bluetooth has been described.

(2) Next, the operation to turn off the physical connection between the first wireless communication unit 100 and the second wireless communication unit 110 and to actually start the wireless data communication after the link has been establish will be described (refer to Fig. 1).

In this case, the operation of the first wireless communication unit 100 and the operation of the second wireless communication unit 110 are the same.

The connection control section 101 acknowledges that the wire connection section 107 has been switched to the unconnected state based on the output of the connection detecting section 105, and sends an instruction to the connection control section 106 to switch the connection change-over switch 103. Corresponding to the instruction, the connection control section 106 switches the connection change-over switch 103 to the communication antenna 104 side.

Likewise, the connection control section 111 acknowledges that the wire connection section 117 has been switched to the unconnected state based on the output of the connection detecting section 115, and sends an instruction to the connection control section 116 to switch over the connection change-over switch 113. Corresponding to the instruction, the connection control section 116 switches the connection change-over switch 113 to the communication antenna 114 side.

Thus, actual wireless data communication becomes available.

As described above, all of the procedures up to the link establishment is carried out by means of the wired connection. Accordingly, for example, the Inquiry packet, which is transmitted by the first wireless communication unit 100, is reliably received by the second wireless communication unit 110 without allowing to leaking the packet to the external. Further, the FHS packet, which is received by the first wireless communication unit 100 as the response to the Inquiry packet, can be determined as the FHS packet, which is transmitted by the second wireless communication unit 110. Furthermore, after receiving the FHS packet, the first wireless communication unit 100 can advance to the operation to automatically transmit the Page packet.

Owing to this arrangement, the time required for establishing the wireless link from the point of time when the device search starts can be reduced, and the wireless link between the first wireless communication unit 100 and the second wireless communication unit 110 can be reliably established.

Furthermore, since the user input is not required from the point of time when the device search starts to the point of time when the wireless link is established, the limited device in the user interface can initiatively carry out the establishment of the wireless link.

Needless to say, it may be arranged so that, based on the control signals from the connection control sections 101 and 111, the communication sections 102 and 112 in the both sides recognize the fact that the wire connection sections 107 and 117 has been physically connected, and reduce the output level of the signals for carrying out the wired communication, which are transmitted therefrom respectively. The output level of the signals necessary for carrying out the wired communication is considerably smaller than the output level of the signals necessary for carrying out the wireless communication. Accordingly, by reducing the output level of the signals, the power consumption of the entire wireless communication system can be reduced with no problem. In this case, the connection control section 101 corresponds to means including a first signal level adjusting means of the present invention.

Here, the embodiment of the present invention has been described in detail.

In the above-described embodiment, the wireless data communication of the present invention is carried out by a wireless communication system, which uses the Bluetooth. However, the wireless data communication is not limited to the above, but may be carried out by another wireless communication system.

The program of the present invention is a program for causing a computer to execute the operation of all or a part of the steps (or, process, operation, working and the like) of the wireless communication method of the above-described present invention; therefore, the program operates in collaboration with a computer.

Also, the recording medium of the present invention is a recording medium which bears the program for causing the computer to execute all or a part of the operation of all or a part of the steps (or, process, operation, working and the like) of the wireless communication method of the above-described present invention; and is a recording medium which is readable by a computer, thereby the above read out program is executed to carry out the above-described operations in collaboration with the computer.

In the present invention, the above wording "a part of steps (or, process, operation, working and the like) "means one or several steps in these several steps.

In the present invention, the above wording "operation of steps (or, process, operation, working and the like)" means all or a part of operations of the above steps.

As for the mode of application of the program of the present invention may be such mode that the program is recorded on a recording medium readable by a computer, and operates in collaboration with a computer.

Also, another mode of the program of the present invention may be such mode that the program is transmitted through a transmission medium, read out by a computer and operates in collaboration with a computer

Further, as for the recording medium, ROM and the like are included; and as for the transmission medium, transmission medium such as the Internet, light, electric wave, acoustic wave, and the like are included.

Still further, the above-described computer of the present invention is not limited to a pure hardware such as CPU, but a firmware, OS, and further, peripheral devices may be included.

As described above, the configuration of the present invention may be achieved by means of software or hardware.

### Industrial Applicability

As demonstrated above, the present invention has a merit such that the procedures up to the establishment of a wireless link in a wireless network can be carried out swiftly.

## Claims

1. A wireless communication system, comprising:
a first wireless communication unit including first wireless communication means that performs wireless data communication, first wired communication means that performs wired data communication to establish a wireless link for performing said wireless data communication using a wired connection, and first change-over means that changes over whether said wireless data communication should be performed using said first wireless communication means or said wired data communication should be performed using said first wired communication means; and
a second wireless communication unit including second wireless communication means that performs said wireless data communication with said first wireless communication means, second wired communication means that performs said wired data communication with said first wired communication means using said wired connection, and second change-over means that changes over whether said wireless data communication should be performed using said second wireless communication means or said wired data communication should be performed using said second wired communication means.

2. The wireless communication system according to claim 1, wherein said first wireless communication unit further includes first wired connection detecting means that detects whether or not said wired connection is being performed between said first wired communication means and said second wired communication means;
when said first wired connection detecting means detects that said wired connection is being performed, said first change-over means changes over so that said wired data communication is performed, and using the wired connection detected by said first detecting means, gives a change-over instruction to said second change-over means to change over so that said wired data communication is performed;
said second change-over means changes over, based on the change-over instruction given by said first change-over means, so that said wired data communication is performed.

3. The wireless communication system according to claim 2, wherein said first wireless communication unit further includes a first signal level adjusting means that, when said first wired connection detecting means detects that said wired connection is being performed, adjusts a signal level so that said wired data communication is performed using a signal level smaller than the signal level necessary for said wireless data communication.
